# EUROPEAN PATENT APPLICATION

(11) **EP 4 145 252 A1**
(43) Date of publication of application: **08.03.2023**
(21) Application number: 22178255.0
(22) Date of filing: 09.06.2022
(51) Int. Cl.: G06F 3/01, G06T 19/00, G06F 3/147

(54) **METHOD AND APPARATUS FOR AUGMENTING REALITY, DEVICE AND STORAGE MEDIUM**

(30) Priority: 01.09.2021 CN 202111019764
(71) Applicant: Beijing Baidu Netcom Science and Technology Co., Ltd., Beijing 100085 (CN)
(72) Inventor: YAO, Guangyuan, Beijing, 100085 (CN)
(74) Representative: Richly & Ritschel Patentanwälte PartG mbB

(57) **Abstract**

A method and apparatus for augmenting reality, a device and a storage medium are provided. A specific implementation comprises: acquiring an image collected by an image collection apparatus installed on a AR HMD; receiving an image processing instruction inputted by a user; uploading the image and the image processing instruction to a cloud side, for the cloud side to process the image according to the image processing instruction to obtain a processed augmented reality image; and receiving the processed augmented reality image from the cloud side to display the processed augmented reality image. According to the implementation, the cloud side can be utilized to process the image according to the image processing instruction, which meets the processing requirement of the AR HMD for the image.

## Description

### TECHNICAL FIELD

The present invention relates to the field of computer technology, specifically to the field of augmented reality, and particularly to a method and apparatus for augmenting reality, a device and a storage medium.

### BACKGROUND

AR head mounted display (HMD), such as a pair of AR glasses, may be regarded as a miniature mobile phone, which determines the current state of a user by tracking the line of vision of eyeballs, and displays information of the road or surrounding buildings that the user sees. Moreover, the AR glasses may further be connected with a mobile phone. If there is a need to make a call or send a text message, it is only required to input information by voice by opening Google Voice.

Traditional AR glasses are very inconvenient to use due to the limitations of local hardware and software computing resources of the AR glasses.

### SUMMARY

Embodiments of the present invention provides a method and apparatus for augmenting reality, a device and a storage medium.

In a first aspect, some embodiments of the present invention provide a method for augmenting reality, the method comprises: acquiring an image collected by an image collection apparatus installed on an augmented reality (AR) head mounted display (HMD); receiving an image processing instruction inputted by a user; uploading the image and the image processing instruction to a cloud side, for the cloud side to process the image according to the image processing instruction to obtain a processed augmented reality image; receiving the processed augmented reality image from the cloud side and displaying the processed augmented reality image.

In a second aspect, some embodiments of the present invention provide an apparatus for augmenting reality, the apparatus comprises: an image acquiring unit, configured to acquire an image collected by an image collection apparatus installed on an augmented reality (AR) head mounted display (HMD); an instruction receiving unit, configured to receive an image processing instruction inputted by a user; a data uploading unit, configured to upload the image and the image processing instruction to a cloud side, for the cloud side to process the image according to the image processing instruction to obtain a processed augmented reality image; and an image displaying unit, configured to receive the processed augmented reality image from the cloud side and displaying the processed augmented reality image.

In a third aspect, some embodiments of the present invention provide an electronic device, the electronic device includes: at least one processor; and a storage device, communicated with the at least one processor, where the storage device stores instructions thereon, the instructions when executed by the at least one processor, cause the at least one processor to perform the method according to the first aspect.

In a fourth aspect, some embodiments of the present invention provide a non-transitory computer readable storage medium storing a computer program, where the computer program, when executed by a processor, causes the processor to perform the method according to the first aspect.

In a fifth aspect, some embodiments of the present invention provide a computer program product, comprising a computer program, where the computer program, when executed by a processor, cause the processor to implement the method according to the first aspect.

According to the technology of the present invention, the cloud side may be utilized to process the image according to the image processing instruction, which meets the processing requirement of the AR HMD for the image.

It should be understood that the content described in this part is not intended to identify key or important features of the embodiments of the present invention, and is not used to limit the scope of the present invention. Other features of the present invention will be easily understood through the following description.

### BRIEF DESCRIPTION OF THE DRAWINGS

The accompanying drawings are used for a better understanding of the scheme, and do not constitute a limitation to the present invention. Here:
Fig. 1 is a diagram of an exemplary system architecture in which an embodiment of the present invention may be applied;
Fig. 2 is a flowchart of a method for augmenting reality according to an embodiment of the present invention;
Fig. 3 is a schematic diagram of an application scenario of the method for augmenting reality according to embodiments of the present invention;
Fig. 4 is a flowchart of a method for augmenting reality according to another embodiment of the present invention;
Fig. 5 is a schematic structural diagram of an apparatus for augmenting reality according to an embodiment of the present invention; and
Fig. 6 is a block diagram of an electronic device used to implement the method for augmenting reality according to embodiments of the present invention.

### DETAILED DESCRIPTION OF EMBODIMENTS

Exemplary embodiments of the present invention are described below in combination with the accompanying drawings, and various details of embodiments of the present invention are included in the description to facilitate understanding, and should be considered as exemplary only. Accordingly, it should be recognized by one of ordinary skill in the art that various changes and modifications may be made to embodiments described herein without departing from the scope of the present invention. Also, for clarity and conciseness, descriptions for well-known functions and structures are omitted in the following description.

It should be noted that embodiments in the present invention and the features in the embodiments may be combined with each other on a non-conflict basis. Embodiments of the present invention will be described below in detail with reference to the accompanying drawings.

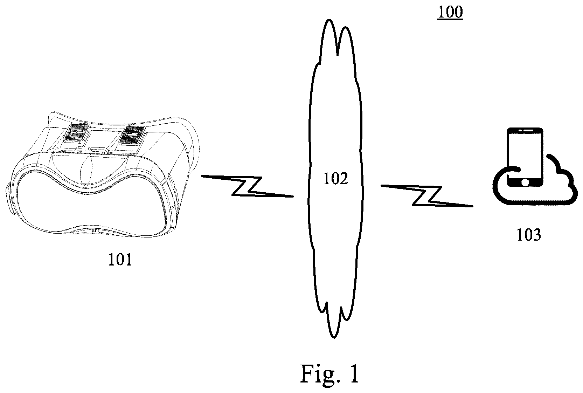

Fig. 1 illustrates an exemplary system architecture 100 in which a method for augmenting reality or an apparatus for augmenting reality according to an embodiment of the present invention may be applied.

As shown in Fig. 1, the system architecture 100 may include a AR HMD 101, a network 102 and a cloud side 103. The network 102 serves as a medium providing a communication link between the AR HMD 101 and the cloud side 103. The network 102 may include various types of connections, for example, wired or wireless communication links, or optical fiber cables.

A user may use the AR HMD 101 to interact with the cloud side 103 via the network 102, to receive or send a message, etc. For example, an image or an instruction may be sent to the cloud side. Various apparatuses (e.g., an image collection apparatus and a microphone) may be installed on the AR HMD 101.

The cloud side 103 may include a cloud server, a cloud mobile phone, and the like. The cloud side 103 may provide various image processing services, for example, a service of processing an image provided by the AR HMD 101. The cloud side 103 may return the processed image to the AR HMD 101, for the AR HMD 101 to display the processed augmented reality image.

It should be noted that the cloud side 103 may be hardware or software. When being the hardware, the cloud side 103 may be implemented as a distributed server cluster composed of a plurality of servers, or may be implemented as a single server. When being the software, the cloud side 103 may be implemented as a plurality of pieces of software or a plurality of software modules (e.g., software or software modules for providing a distributed service), or may be implemented as a single piece of software or a single software module, which will not be specifically limited here.

It should be noted that the method for augmenting reality provided in the embodiment of the present invention is generally performed by the AR HMD 101. Correspondingly, the apparatus for augmenting reality is generally provided in the AR HMD 101.

It should be appreciated that the numbers of the AR HMD, the network and the cloud side in Fig. 1 are merely illustrative. Any number of pairs of AR glasses, networks and cloud sides may be provided based on actual requirements.

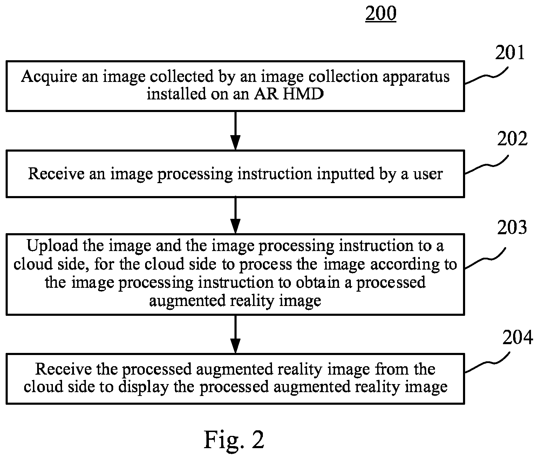

Further referring to Fig. 2, Fig. 2 illustrates a flow 200 of a method for augmenting reality according to an embodiment of the present invention. The method for augmenting reality in this embodiment includes the following steps:

Step 201, acquiring an image collected by an image collection apparatus installed on a AR HMD

In this embodiment, an executing body (e.g., the AR HMD 101) of the method for augmenting reality may first control the image collection apparatus installed on the AR HMD to collect an image. Particularly, the AR HMD may send an image collection instruction to the image collection apparatus. The image collection apparatus may collect an image after receiving the image collection instruction. The image collection apparatus may send the collected image to the AR HMD.

Step 202, receiving an image processing instruction inputted by a user.

In this embodiment, various input apparatuses may be provided on the AR HMD, and the user may input the image processing instruction through the input apparatuses. For example, the user may input a voice instruction through a microphone, or input a preset gesture through the image collection apparatus. The image processing instruction may be a color adjustment instruction, a special effect generation instruction, a three-dimensional reconstruction instruction, or the like.

Step 203, uploading the image and the image processing instruction to a cloud side, for the cloud side to process the image according to the image processing instruction to obtain a processed augmented reality image.

After acquiring the image and receiving the image processing instruction, the AR HMD may upload the image and the image processing instruction to the cloud side. Particularly, in order to reduce the bandwidth occupied when the above data is uploaded, the AR HMD may compress the image and then upload the compressed image. Alternatively, when the image processing instruction satisfies a preset condition, the processing may be performed on the image processing instruction to determine a text or character string corresponding to the image processing instruction, and the obtained text or character string is uploaded to the cloud side. After receiving the image and the image processing instruction, the cloud side may process the image according to the image processing instruction to obtain the processed augmented reality image, and may send the processed augmented reality image to the AR HMD.

Step 204, receiving the processed augmented reality image from the cloud side, and displaying the processed augmented reality image.

After receiving the processed augmented reality image from the cloud side, the AR HMD may display the image for the user to view.

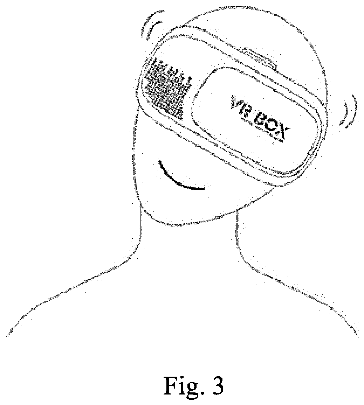

Further referring to Fig. 3, Fig. 3 is a schematic diagram of an application scenario of the method for augmenting reality according to an embodiment of the present invention. In the application scenario of Fig. 3, a user wears a AR HMD, and an image is collected through an image collection apparatus provided on the AR HMD, and speech is input through a microphone provided on the AR HMD. After performing a speech recognition on the speech, the AR HMD obtains a speech text. The speech text is used as an image processing instruction and is uploaded to a cloud side. The cloud side processes the image according to the image processing instruction to obtain a processed augmented reality image, and sends the processed image to the AR HMD. The AR HMD displays the processed augmented reality image.

According to the method for augmenting reality provided in the above embodiment of the present invention, the cloud side can be utilized to process the image according to the image processing instruction, which meets the processing requirement of the AR HMD for the image.

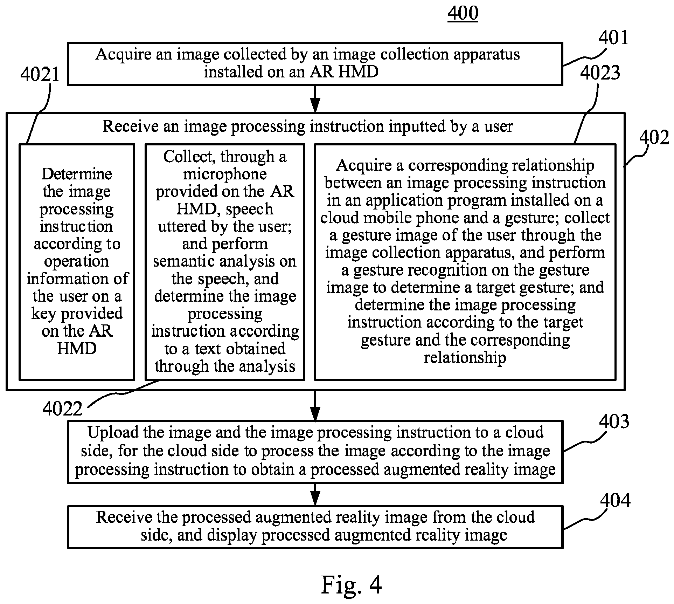

Further referring to Fig. 4, Fig. 4 illustrates a flow 400 of the method for augmenting reality according to another embodiment of the present invention. As shown in Fig. 4, the method in this embodiment may include the following steps:
Step 401, acquiring an image collected by an image collection apparatus installed on a AR HMD.
Step 402, receiving an image processing instruction inputted by a user.

In this embodiment, the AR HMD may implement the receiving of the image processing instruction through the following steps:
Step 4021, determining the image processing instruction according to operation information of the user on a key provided on the AR HMD.

At least one key may be provided on the AR HMD. The user may operate on the at least one key to implement the input of the image processing instruction. The operation information may be various operations of the user on the key, for example, a long press for 5 seconds, one short press, and two short presses. The AR HMD may analyze the operation information to determine the corresponding image processing instruction. For example, the long press for 5 seconds is to perform grayscale processing on the image, and the one short press is to add a blindfold effect on the image.

Step 4022, collecting, through a microphone provided on the AR HMD, speech uttered by the user; and performing a semantic analysis on the speech, and determining the image processing instruction according to a text obtained through the analysis.

At least one microphone may further be provided on the AR HMD. The user may utter speech to the microphone. Each microphone may collect the speech and perform the semantic analysis on the speech to obtain a corresponding text. The AR HMD may directly use the text as the image processing instruction. Alternatively, a keyword in the text is extracted, and the keyword is used as the image processing instruction.

Step 4023, acquiring a corresponding relationship between a gesture and an image processing instruction stored in an application program installed on a cloud mobile phone and; collecting a gesture image of the user through the image collection apparatus, and performing a gesture recognition on the gesture image to determine a target gesture; and determining the image processing instruction according to the target gesture and the corresponding relationship.

In this embodiment, the cloud side may be a cloud mobile phone. On the cloud mobile phone, various application programs applicable to a mobile phone may be installed. The AR HMD may first acquire the corresponding relationship between a gesture (i.g., a hand gesture) and the an image processing instruction in the application programs installed on the cloud mobile phone. For example, an image processing application 1 is installed on the cloud mobile phone. Here, gesture 1 represents the addition of a blindfold effect, gesture 2 represents the addition of a dynamic sticker, and the like. After acquiring the corresponding relationship, the AR HMD may present the corresponding relationship as a guide page. Particularly, the AR HMD may display the shape of the gesture and a corresponding image processing keyword. Then, the gesture image of the user is collected through the image collection apparatus, and the gesture recognition is performed on the gesture image to determine the target gesture. When being performed, the gesture recognition may be performed using an existing gesture recognition algorithm. The recognized gesture is used as the target gesture. Particularly, an image processing chip may be set in the AR HMD, to perform the gesture recognition on the image. The AR HMD may determine the image processing instruction according to the target gesture and the corresponding relationship.

Through the method in this embodiment, it is not required to upload massive data such as the speech and the gesture image to the cloud side, which reduces the time required to upload the data, thus improving the interaction efficiency.

Step 403, uploading the image and the image processing instruction to a cloud side, for the cloud side to process the image according to the image processing instruction to obtain a processed augmented reality image.

Step 404, receiving the processed augmented reality image from the cloud side, and displaying processed augmented reality image.

In some alternative implementations of this embodiment, the AR HMD may further acquire an image collected in real time by the image collection apparatus, and upload the image to the cloud in real time, for the cloud to process the image in real time to obtain a plurality of processed augmented reality images. The AR HMD may display the processed augmented reality images in real time.

In some applications, if the image collection apparatus is collecting an image in real time, the user may not need to input an image processing instruction for each frame of image. For example, a timer may be set in the AR HMD to record the time at which a previous image processing instruction inputted by the user. In a preset time period, the AR HMD may consider that the above image processing instruction is always valid, that is, the image processing is directly performed on all images uploaded within this time period.

The method for augmenting reality provided in the above embodiment of the present invention may allow the user to input the image processing instruction in various ways. Moreover, as compared with the existing AR glasses, the number of pieces of hardware in the AR HMD can be reduced since the complicated processing is not required to be performed on the image. In addition, externally provided hardware is not required to support the image processing, which makes the size of the AR HMD smaller and the performance higher.

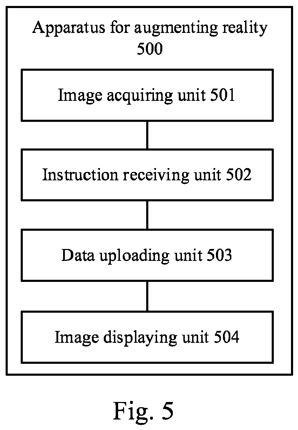

Further referring to Fig. 5, as an implementation of the method shown in the above drawing, an embodiment of the present invention provides an apparatus for augmenting reality. The embodiment of the apparatus corresponds to the embodiment of the method shown in Fig. 2. The apparatus may be applied in various electronic devices.

As shown in Fig. 5, an apparatus 500 for augmenting reality in this embodiment includes: an image acquiring unit 501, an instruction receiving unit 502, a data uploading unit 503 and an image displaying unit 504.

The image acquiring unit 501 is configured to acquire an image collected by an image collection apparatus installed on a AR HMD.

The instruction receiving unit 502 is configured to receive an image processing instruction inputted by a user.

The data uploading unit 503 is configured to upload the image and the image processing instruction to a cloud side, for the cloud side to process the image according to the image processing instruction to obtain a processed augmented reality image.

The image displaying unit 504 is configured to receive the processed augmented reality image from the cloud side and displaying the processed augmented reality image.

In some alternative implementations of this embodiment, the instruction receiving unit 502 may be further configured to: determine the image processing instruction according to operation information of the user on a key set on the AR HMD.

In some alternative implementations of this embodiment, the instruction receiving unit 502 may be further configured to: collect, through a microphone set on the AR HMD, speech uttered by the user; and perform a semantic analysis on the speech, and determining the image processing instruction according to a text obtained by the semantic analysis.

In some alternative implementations of this embodiment, the cloud side includes a cloud mobile phone. The instruction receiving unit 502 may be further configured to: acquire a corresponding relationship between a gesture and each image processing instruction in an application program installed on the cloud mobile phone; collect a gesture image of the user through the image collection apparatus, and perform a gesture recognition on the gesture image to determine a target gesture; and determine the image processing instruction according to the target gesture and the corresponding relationship.

In some alternative implementations of this embodiment, the instruction receiving unit 502 may be further configured to: in response to determining that a time length between a moment at which a current image is acquired and a moment at which an image is previously acquired is less than a preset time length, using an image processing instruction of the previously acquired image as an image processing instruction of the current image.

It should be understood that, the units 501-504 described in the apparatus 500 for augmenting reality respectively correspond to the steps in the method described with reference to Fig. 2. Accordingly, the above operations and features described for the method for augmenting reality are also applicable to the apparatus 500 and the units included therein, and thus will not be repeatedly described here.

In the technical solution of the present invention, the acquisition, storage, use, etc. of the personal information of a user all comply with the provisions of the relevant laws and regulations, and do not violate public order and good customs.

According to an embodiment of the present invention, an electronic device, a readable storage medium and a computer program product are provided.

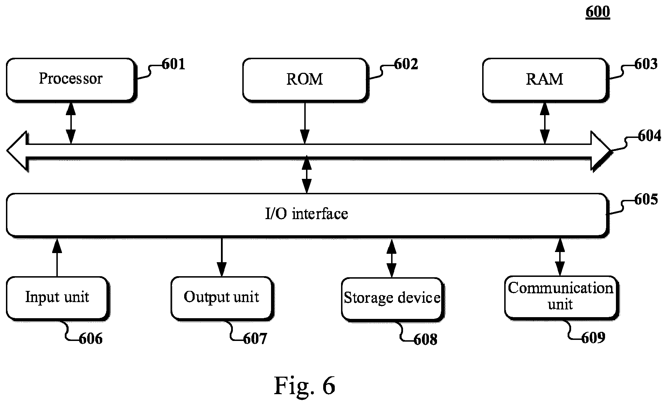

Fig. 6 is a block diagram of an electronic device 600 performing the method for augmenting reality, according to an embodiment of the present invention. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing device, a cellular telephone, a smart phone, a wearable device and other similar computing apparatuses. The parts shown herein, their connections and relationships, and their functions are only as examples, and not intended to limit implementations of the present invention as described and/or claimed herein.

As shown in Fig. 6, the electronic device 600 includes a processor 601, which may perform various appropriate actions and processing, based on a computer program stored in a read-only memory (ROM) 602 or a computer program loaded from a storage unit 608 into a random access memory (RAM) 603. In the RAM 603, various programs and data required for the operation of the electronic device 600 may also be stored. The processor 601, the ROM 602, and the RAM 603 are connected to each other through a bus 604. An input/output (I/O) interface 605 is also connected to the bus 604.

A plurality of parts in the electronic device 600 are connected to the I/O interface 605, including: an input unit 606, for example, a keyboard and a mouse; an output unit 607, for example, various types of displays and speakers; the storage unit 608, for example, a disk and an optical disk; and a communication unit 609, for example, a network card, a modem, or a wireless communication transceiver. The communication unit 609 allows the electronic device 600 to exchange information/data with other devices over a computer network such as the Internet and/or various telecommunication networks.

The processor 601 may be various general-purpose and/or dedicated processing components having processing and computing capabilities. Some examples of the processor 601 include, but are not limited to, central processing unit (CPU), graphics processing unit (GPU), various dedicated artificial intelligence (AI) computing chips, various processors running machine learning model algorithms, digital signal processors (DSP), and any appropriate processors, controllers, microcontrollers, etc. The processor 601 performs the various methods and processes described above, such as the method for augmenting reality. For example, in some embodiments, the method for augmenting reality may be implemented as a computer software program, which is tangibly included in a machine readable storage medium, such as the storage unit 608. In some embodiments, part or all of the computer program may be loaded and/or installed on the electronic device 600 via the ROM 602 and/or the communication unit 609. When the computer program is loaded into the RAM 603 and executed by the processor 601, one or more steps of the method for augmenting reality described above may be performed. Alternatively, in other embodiments, the processor 601 may be configured to perform the method for augmenting reality by any other appropriate means (for example, by means of firmware).

Various embodiments of the systems and technologies described in this article may be implemented in digital electronic circuit systems, integrated circuit systems, field programmable gate arrays (FPGA), application specific integrated circuits (ASIC), application-specific standard products (ASSP), system-on-chip (SOC), complex programmable logic device (CPLD), computer hardware, firmware, software, and/or their combinations. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of augmenting reality may be written in any combination of one or more programming languages. The above program codes may be encapsulated into computer program products. These program codes or computer program products may be provided to a processor or controller of a general purpose computer, special purpose computer or other programmable data processing apparatus such that the program codes, when executed by the processor 601, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present invention, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with a user, the systems and technologies described herein may be implemented on a computer, the computer has: a display apparatus (e.g., CRT (cathode ray tube) or LCD (liquid crystal display) monitor for displaying information to the user; and a keyboard and a pointing apparatus (for example, a mouse or trackball), the user may use the keyboard and the pointing apparatus to provide input to the computer. Other kinds of apparatuses may also be used to provide interaction with the user; for example, the feedback provided to the user may be any form of sensory feedback (for example, visual feedback, auditory feedback, or tactile feedback); and may use any form (including acoustic input, voice input, or tactile input) to receive input from the user.

The systems and technologies described herein may be implemented in a computing system (e.g., as a data server) that includes back-end components, or a computing system (e.g., an application server) that includes middleware components, or a computing system (for example, a user computer with a graphical user interface or a web browser, through which the user may interact with the embodiments of the systems and technologies described herein) that includes front-end components, or a computing system that includes any combination of such back-end components, middleware components, or front-end components. The components of the system may be interconnected by any form or medium of digital data communication (e.g., a communication network). Examples of the communication network include: local area network (LAN), wide area network (WAN), and Internet.

The computer system may include a client and a server. The client and the server are generally far from each other and usually interact through a communication network. The client and server relationship is generated by computer programs operating on the corresponding computer and having client-server relationship with each other. The server may be a cloud server, also known as a cloud computing server or a cloud host, which is a host product in a cloud computing service system and may solve the defects of difficult management and weak service scalability existing in a conventional physical host and a VPS (Virtual Private Server) service. The server may also be a server of distributed system or a server combined with blockchain.

It should be understood that various forms of processes shown above may be used to reorder, add, or delete steps. For example, the steps described in embodiments of the present invention may be performed in parallel, sequentially, or in different orders, as long as the desired results of the technical solution disclosed in embodiments of the present invention can be achieved, no limitation is made herein.

The above specific embodiments do not constitute a limitation on the protection scope of the present invention. Those skilled in the art should understand that various modifications, combinations, sub-combinations and substitutions can be made according to design requirements and other factors. Any modification, equivalent replacement and improvement made within the spirit and principle of the present invention shall be included in the protection scope of the present invention.

## Claims

1. A method for augmenting reality, comprising:
acquiring an image collected by an image collection apparatus installed on an augmented reality (AR) head mounted display (HMD);
receiving an image processing instruction inputted by a user;
uploading the image and the image processing instruction to a cloud side, for the cloud side to process the image according to the image processing instruction to obtain a processed augmented reality image; and
receiving the processed augmented reality image from the cloud side and displaying the processed augmented reality image.

2. The method according to claim 1, wherein the receiving the image processing instruction inputted by the user comprises:
determining the image processing instruction according to operation information of the user on a key set on the AR HMD.

3. The method according to any one of the preceding claims, wherein the receiving the image processing instruction inputted by the user comprises:
collecting, through a microphone set on the AR HMD, speech uttered by the user; and
performing a semantic analysis on the speech, and determining the image processing instruction according to a text obtained by the semantic analysis.

4. The method according to any one of the preceding claims, wherein the cloud side comprises a cloud mobile phone, and
the receiving the image processing instruction inputted by the user comprises:
acquiring a corresponding relationship between a gesture and each image processing instruction in an application program installed on the cloud mobile phone;
collecting a gesture image of the user through the image collection apparatus, and performing a gesture recognition on the gesture image to determine a target gesture; and
determining the image processing instruction according to the target gesture and the corresponding relationship.

5. The method according to any one of the preceding claims, wherein the receiving the image processing instruction inputted by the user comprises:
in response to determining that a time length between a moment at which a current image is acquired and a moment at which an image is previously acquired is less than a preset time length, using an image processing instruction of the previously acquired image as an image processing instruction of the current image.

6. An apparatus for augmenting reality, the apparatus comprising means for carrying out the method according to any one of claims 1-5.

7. A non-transitory computer readable storage medium, storing a computer program thereon, wherein the computer program, when executed by a processor, causes the processor to perform the method according to any one of claims 1-5.

8. A computer program product, comprising a computer program, wherein the computer program, when executed by a processor, cause the processor to implement the method according to any one of claims 1-5.
